# EUROPÄISCHE PATENTSCHRIFT

(11) **EP 0 587 626 B1**
(45) Veröffentlichungstag und Bekanntmachung des Hinweises auf die Patenterteilung: **06.08.1997**
(21) Anmeldenummer: 92910921.3
(22) Anmeldetag: 25.05.1992
(51) Int. Cl.: H04H 1/00

(54) **VERFAHREN ZUR RUNDFUNKÜBERTRAGUNG EINES ZEITLICH VARIIERENDEN STEUERSIGNALS UND RUNDFUNKEMPFÄNGER ZUM EMPFANGEN EINES DERARTIGEN STEUERSIGNALS**
PROCESS FOR THE RADIO TRANSMISSION OF A CONTROL SIGNAL VARYING IN TIME AND RADIO RECEIVER FOR RECEIVING SUCH A CONTROL SIGNAL
PROCEDE DE TRANSMISSION RADIOPHONIQUE D'UN SIGNAL DE COMMANDE VARIABLE DANS LE TEMPS ET RECEPTEUR RADIOPHONIQUE POUR LA RECEPTION DE CE SIGNAL DE COMMANDE

(30) Priorität: 31.05.1991 DE 4117787
(43) Veröffentlichungstag der Anmeldung: 23.03.1994
(73) Patentinhaber: Thomson Consumer Electronics Sales GmbH, 30453 Hannover (DE)
(72) Erfinder: EINSEL, Robert, D-29223 Celle (DE); GÖKEN, Klaus, D-29223 Celle (DE); GESSLER, Hans-Jörg, D-78050 Villingen-Schwenningen (DE)
(74) Vertreter: Hartnack, Wolfgang, Dipl.-Ing.
(86) Internationale Anmeldenummer: EP9201166
(87) Internationale Veröffentlichungsnummer: WO9222153

(56) Entgegenhaltungen:
- EP-A- 0 360 691
- DD-A- 267 860
- DE-A- 3 311 646
- DE-A- 4 020 932
- DE-C- 4 004 576

## Beschreibung

Die Erfindung bezieht sich auf ein Übertragungsverfahren gemäß dem Oberbegriff des Patentanspruchs 1 bzw. auf einen Ründfünkempfänger gemäß dem Oberbegriff des Patentansprüchs 11. Ein solches Übertragungsverfahren ist aus dem deutschen Patent DE 40 04 576 bekannt.

Dem vorgenannten Patent liegt die Aufgabe zugrunde, sende- und empfängerseitige Maßnahmen anzugeben, um das zeitkritische Steuersignal für variable Dynamik übertragen und empfangen zu können.

Der Anmeldung liegt die Aufgabe zugrunde, sende- und empfängerseitige Maßnahmen anzugeben, um eine exakte zeitkorrelierte Zuordnung des zeitlich korrelierten Steuersignals zum betreffenden Signalabschnitt des Hörfunkprogrammsignals zu gewährleisten.

Diese Aufgabe wird erfindungsgemäß durch die im Patentanspruch 1 bzw. 11 angegebenen Merkmale gelöst. Vorteilhafte Weiterbildungen der Erfindung sind in den Unteransprüchen angegeben.

Wie bereits im o.a. Patent beschrieben, ist es aus der DE-OS 33 11 646 bekannt, das Steuersignal dem tieffrequenten Bandbereich des Nutzsignals unterhalb 100 Hz zuzusetzen, was ohne hörbare Beeinflussung des Nutzsignals möglich sein sollte. Da jedoch die Übertragungskapazität am tieffrequenten Randbereich relativ gering ist, wird die Auflösung des Steuersignals beeinträchtigt. Ferner ist der tieffrequente Randbereich störungsempfindlich, beispielsweise gegen Netzbrummen, so daß insgesamt die Steuersignalübertragung in diesem Bereich des Nutzsignalbandes problematisch ist. Diese Erkenntnis führte zu der Maßnahme, das Steuersignal in den RDS-Datenstrom einzubinden und somit für eine gesicherte Übertragung und Auswertung des Steuersignals zu sorgen.

Zwar ist die Übertragung eines sich ständig verändernden Signals wie eines Dynamik-Zusatz- und Referenzsignals im unteren Frequenzbereich, also unhörbar, des stereophonen Seitensignals als kritisch einzustufen, jedoch ist es durchaus möglich, ein feststehendes Signal z.B. 60 Hz Sinus oder Kosinus im unteren Frequenzbereich unhörbar und sowohl für den Empfänger als auch für das Hörfunkprogrammsignal unkritisch zu übertragen. Ist einem solchen Referenzsignal - im folgenden zweites Zeit-Referenzsignal genannt - ein entsprechend zeitgleich erzeugtes erstes Zeit-Referenzsignal zugeordnet, welches studioseitig in den RDS-Datenstrom eingefügt wird, so kann an einem Sender eine exakte zeitkorrelierte bzw. synchrone Ausstrahlung der variablen Zusatzsignale zu dem Hörfunkprogrammsignal gewährleistet werden.

Vorzugsweise stellt das zweite Zeit-Referenzsignal einen Zahlenwert dar, der von einem Zähler im Sendestudio erzeugt wird, der durch einen Signal- oder Taktgenerator für das erste Zeit-Referenzsignal synchronisiert wird, wobei der Taktgenerator seinerseits von einer Funkuhr sehr genau synchronisiert werden kann. Das zweite Zeit-Referenzsignal oder Pilotsignal steuert im Sender einen weiteren Zähler, der einen Ausgang aufweist, der mit einem ersten Eingang einer Vergleichsschaltung verbunden ist, dem über einen zweiten Eingang der Zählerwert des RDS-Datensignals zugeführt wird. Aus dem Vergleich der Zählerwerte läßt sich eine Stellgröße ableiten, mittels der sich Verzögerungsstufen steuern lassen, die je nach Bedarf entweder das Hörfunkprogrammsignal oder den RDS-Datenstrom gegeneinander derartig verzögern, daß eine exakte Zusammenfügung des RDS-Datenstroms mit dem Hörfunkprogrammsignal möglich wird. Vorzugsweise werden die einem entsprechenden Signalabschnitt des Hörfunkprogrammsignals zugeordneten RDS- bzw. Steuersignaldaten zeitlich vor dem entsprechenden Abschnitt ausgestrahlt.

Besonders vorteilhaft läßt sich die Erfindung in Rundfunkempfängern mit mehreren Abstimmeinheiten realisieren, welche in der Lage sind, das gleiche Hörfunkprogramm auf verschiedenen Frequenzen zu empfangen, wobei das Hörfunkprogrammsignal ein wie vorstehend beschriebenes Zusatzsignal enthält, welches exakt zeitkorreliert einem bestimmten Hörfunkprogrammsignalinhalt zugeordnet ist. Neben der Verarbeitung der variablen Zusatzsignale bei der Wiedergabe lassen sich weitere eine bessere Wiedergabequalität erzielende Ausgestaltungen realisieren.

Dazu wird jedem Empfängerzug ein Demodulator und ein Decoder oder beiden Empfängerzügen ein gemeinsamer Demodulator und Decoder zur Demodulierung und Decodierung der im Hörfunkprogrammsignal enthaltenen Zusatzsignale zugeordnet. Außerdem ist eine Vergleichseinrichtung vorgesehen, welche die Zusatzsignale miteinander vergleicht und aus dem Vergleich eine Stellgröße ermittelt, welche ein Maß für die zeitliche Verzögerung oder Voreilung eines Hörfunkprogrammsignals gegenüber dem anderen darstellt.

Zur zeitlich exakten Überlagerung beider Hörfunkprogrammsignal ist im Signalweg eines jeden Empfängerzuges eine (oder für beide Empfängerzüge eine gemeinsame) variable Verzögerungsstufe vorgesehen, wobei die Verzögerungsstufen von einer Synchronisationseinrichtung gesteuert werden, der die Stellgröße der Vergelichseinrichtung zugeführt wird. Die Synchronisationseinrichtung synchronisiert über die Verzögerungsstufen (oder die Verzögerungsstufe) gleiche Hörfunkprogrammsignale verschiedener Sender auf eine einheitliche gleichzeitige Zeitachse.

Die auf die gleichzeitige Zeitachse synchronisierten Hörfunkprogrammsignale von mehreren Empfängerzügen werden überlagert bzw. überblendet, wobei ein resultierendes Hörfunkprogrammsignal entsteht, welches an eine Wiedergabeeinrichtung z.B. einen Lautsprecher abgegeben wird. Hier macht sich die Erfindung die Erkenntnis zunutze, daß bei der Überlagerung von Hörfunkprogrammsignalen verschiedener Sender jeweils auch verschiedene Störungen die einzelnen Hörfunkprogrammsignale beeinträchtigen. Werden nun die auf die gleichzeitige Zeitachse synchronisierten Hörfunkprogrammsignale überlagert bzw. überblendet, werden die Störungen gegenüber dem Nutzsignalanteil der Hörfunkprogrammsignale weit weniger addiert bzw. spielen eine geringere Rolle als in den einzelnen Hörfunkprogrammsignalen.

Vorzugsweise ist der Decoder im Rundfunkempfänger ein RDS-Decoder, die Vergleichseinrichtung ein Bitmuster-Vergleicher, der einen Vergleich der sendestudioseitig in den Datenstrom eines Radiodatensignals (RDS-Signal) eingefügten RDS-Daten vornimmt und den Laufzeitunterschied identischer zueinander zugeordneter Bitmuster ermittelt. Da die Bitmuster der Steuersignale in allen Hörfunkprogrammsignalen verschiedener Sender dem gleichen Hörfunkprogrammsignalinhalt zugeordnet sind, lassen sich aus dem Laufzeitunterschied dieser Bitmuster entsprechende Stellgrößen ableiten, mit denen sich eine oder mehrere Verzögerungsstufen steuern lassen.

Die Erfindung wird nachfolgend anhand eines Ausführungsbeispiels näher beschrieben: In den Zeichnungen stellen dar:
- Fig. 1: eine schematische Darstellung der Rundfunkversor gung eines aus zwei Teilgebieten bestehenden Sendegebietes nach dem erfindungsgemäßen Übertragungsverfahren,
- Fig. 2: ein Blockschaltbild eines für das Übertragungs verfahren gemäß Fig. 1 angepaßten Muttersenders,
- Fig. 3: ein Blockschaltbild eines Hör funkempfängers zum Empfangen und Auswerten des gemäß dem Übertragungsverfahren nach Fig. 1 ausgestrahlten Steuersignals für die variable Dynamik,
- Fig. 4: ein vereinfachtes Blockschaltbild eines für das erfindungsgemäße Übertragungsverfahren angepaßten Sendestudios,
- Fig. 5: ein vereinfachtes Blockschaltbild eines für das erfindungsgemäße Übertragungsverfahren angepaßten Muttersenders,
- Fig. 6: ein vereinfachtes Blockschaltbild eines für das erfindungsgemäße Übertragungsverfahren angepaßten Rundfunkempfängers,
- Fig. 7: ein alternatives Teil-Blockschaltbild zu Fig. 6.

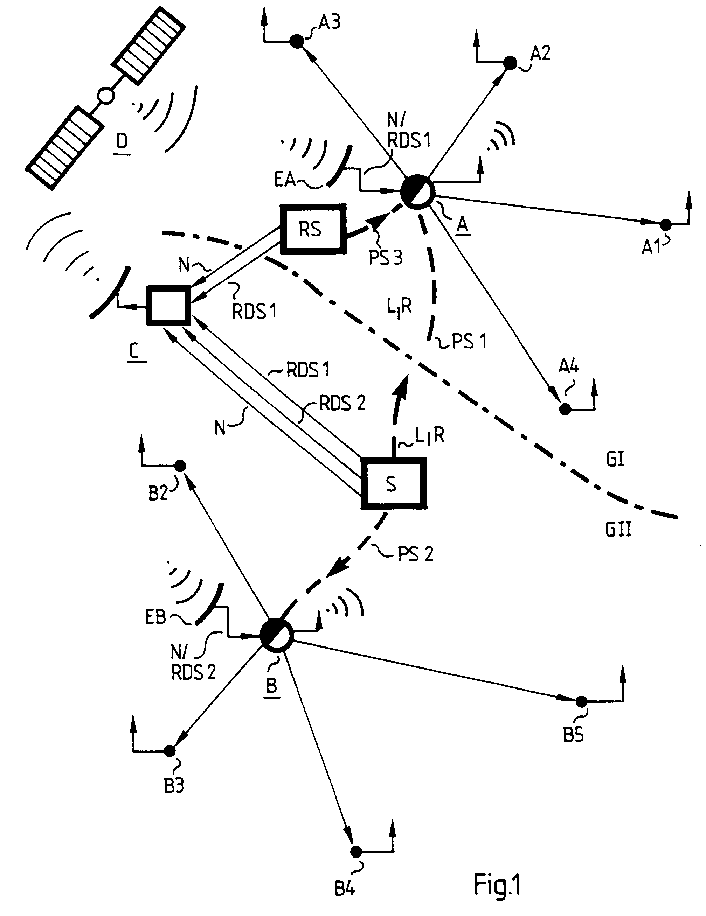

Das der Darstellung in Fig. 1 zugrundegelegte Rundfunkversorgungsgebiet für die UKW-Versorgung mit z.B. dem ersten Hörfunkprogramm des Norddeutschen Rundfunks, NDR 1, weist ein erstes Teilgebiet GI (z.B. Schleswig-Holstein) und ein zweites Teilgebiet GII (z.B. Hamburg) auf. Das Hörfunkprogramm, hier NDR 1, wird zu bestimmten Zeiten "regionalisiert", das heißt, daß in den beiden Teilgebieten GI, GII zu bestimmten Sendezeiten dasselbe Programm und zu bestimmten anderen Sendezeiten unterschiedliche Programme ausgestrahlt werden. Da während einer solchen "Regionalisierung" die RDS-Informationen beispielsweise für Programmname (PS), Programmidentifikationsnummer (PI) und alternative Frequenzen (AF) unterschiedlich sind, muß dieser speziellen Gegebenheit in noch zu beschreibender Weise Rechnung getragen werden.

Das Versorgungsgebiet weist ein Hauptsendestudio S auf, welches das überregionale Hörfunkprogramm sowie das regionale Programm für das zweite Teilgebiet GII produziert. Ein davon örtlich entferntes Regionalstudio RS produziert nur das regionale Programm für das erste Teilgebiet GI. Die beiden Studios S und RS sind über eine Postkabelstrecke PS2 bzw. PS3 mit einem Muttersender B (für das zweite Teilgebiet GII) bzw. A (für das erste Teilgebiet GI) verbunden. Ferner ist das Hauptsendestudio S über eine Postkabelstrecke PS1 mit dem Muttersender A verbunden. Im Falle eines überregionalen Programms versorgt das Hauptsendestudio S beide Muttersender A und B mit dem Hörfunkprogrammsignal, das als Links(L)- und Rechts(R)-Signal auf den Postkabelstrecken PS1 und PS2 übertragen wird. Im Falle einer Regionalsendung für das zweite Teilgebiet GII versorgt das Hauptsendestudio S nur den Muttersender B mit dem "GII"-Programmsignal, während das Regionalstudio RS nur den Muttersender A mit dem "GI"-Programmsignal versorgt.

Der Muttersender A ist über Leitungen oder Ballempfangsstrekken mit Tochtersendern Al bis A4 verbunden, während der Muttersender B in ähnlicher Weise mit Tochtersendern B1 bis B4 verbunden ist.

Zusätzlich oder anstelle der Verbindungen über die Postkabelstrecken PS1 bis PS3 können die Studios S und RS über Digital strecken N/RDS1/RDS2 bzw. N/RDS1 mit einer Erdfunkstelle C einer Satellitenübertragungsstrecke verbunden sein. Diese führt von der Erdfunkstelle C über einen Rundfunksatelliten D zu Parabolempfangsantennen EA bzw. EB von Satellitenempfangsanlagen an den Standorten der Muttersender A bzw. B.

Da - wie schon erwähnt - bei der "Regionalisierung" des Programms, hier NDR 1, unterschiedliche RDS-Daten für die beiden Teilgebiete GI, GII auszusenden sind, weist die Satellitenübertragungsstrecke einen einzigen digitalen Nutzsignalkanal N und zwei getrennte, mit RDS1 und RDS2 bezeichnete Zusatzsignalkanäle aus. Der Muttersender A empfängt neben dem digitalen Nutzsignalkanal N nur den einen Zusatzsignalkanal RDS1, wohingegen der Muttersender B neben dem digitalen Nutzsignalkanal N nur den anderen Zusatzsignalkanal RDS2 empfängt. Im Falle einer überregionalen Sendung (die nur vom Hauptsendestudio S ausgeht) sind die RDS-Daten für die Zusatzsignalkanäle RDS1 und RDS2 identisch.

Erfindungswesentlich ist, daß die RDS-Daten bereits in dem Hauptsendestudio S und gegebenenfalls in dem Regionalstudio RS erzeugt und formatiert werden, wobei die zeitkritischen Steuersignale für die variable Dynamik exakt zeitkorreliert zu dem Nutzsignal (analog oder digital) mit einer gesonderten Kennung in den RDS-Datenstrom eingefügt und an die Muttersender A, B übertragen werden.

Die Muttersender A, B empfangen in noch zu beschreibender Weise den zugeordneten RDS-Datenstrom mit dem Steuersignal für die variable Dynamik und fügen den empfangenen RDS-Datenstrom zeitkorreliert in das Multiplexsignal ein, welches aus den L- und R-Signalen des an den Muttersendern A, B empfangenen Nutzsignals durch Matrizierung und FM-Modulation mit 38 kHz-Trägerunterdrückung gebildet wird.

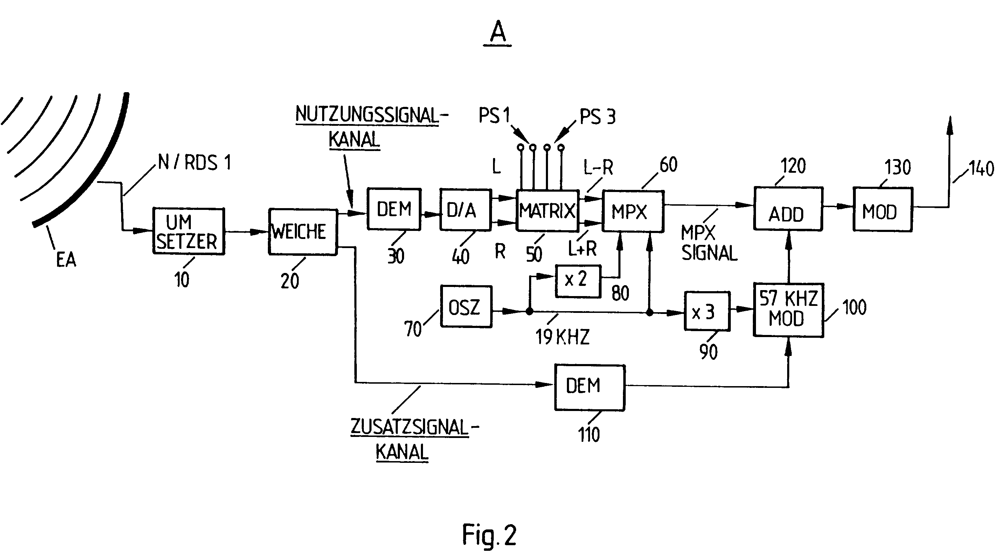

Der in Fig. 2 anhand eines Blockschaltbildes schematisch dargestellte Muttersender A hat denselben Aufbau wie der Muttersender B. Über die Parabolempfangsantenne EA empfängt der Muttersender A die von dem Rundfunksatelliten D übertragenen Nutzsignal- und Zusatzsignalkanäle N und RDS1. In dem Umsetzer 10 (Outdoor-Unit) erfolgt eine Umsetzung der 12 GHz-RF-Frequenz auf etwa 800 kHz, worauf in einer Kanalweiche 20 eine Aufspaltung in den Nutzsignalkanal und den Zusatzsignalkanal erfolgt.

Das Nutzsignal N wird zunächst in einem Demodulator 30 demoduliert. Das so erhaltene Basisbandsignal wird in einem Digital/Analog-Wandler 40 in ein ananloges Signal rückgewandelt, worauf die sich ergebenden L- und R-Signale einer Stereomatrix 50 zugeführt werden, um die Matrizierungen L+R und L-R entsprechend der UKW-Norm zu erhalten. Die matrizierten Signale werden in einem Multiplexer 60 in ein Multiplexsignal umgewandelt, bei welchem das (L+R)-Signal in der Frequenzlage 0 - 15 kHz und das (L-R)-Signal in der Frequenzlage 23 - 53 kHz angeordnet werden. Hierzu wird das (L-R)-Signal einem 38 kHz-Träger in FM aufmoduliert, welcher anschließend unterdrückt wird. Ferner wird ein 19 kHz-Pilotton in die Frequenzlücke zwischen dem (L+R)- und dem (L-R)-Band eingefügt. Der 19 kHz-Pilotton wird einem 19 kHz-Oszillator 70 entnommen, während der 38 kHz-Träger durch Verdoppelung des 19 kHz-Pilottons in einer Verdopplerstufe 80 gewonnen wird.

Das Multiplexsignal am Ausgang des Multiplexers 60 wird einer Addierstufe 120 zugeführt, deren zweiter Eingang mit einem 57 kHz-Modulator 100 verbunden ist. Dem Modulator 100 wird ein 57 kHz-Hilfsträger zugeführt, der durch Verdreifachung des 19 kHz-Pilottons in einer Verdreifacherstufe 90 erzeugt wird. Diesem Hilfsträger wird der RDS-Datenstrom direkt aufmoduliert (in 2-PSK-Modulation), welcher in dem Zusatzsignalkanal empfangen und dort von dem Demodulator 110 in die Basislage demoduliert wird. Eine Umcodierung des demodulierten RDS-Datenstroms ist nicht erforderlich.

Die Addierstufe 120 fügt den modulierten 57 kHz-Hilfsträger, der ihr über den Modulator 100 zugeleitet wird, in das von dem Multiplexer 60 kommende Multiplexsignal ein, das nach dieser Ergänzung in einem Modulator 130 auf den RF-Träger des Muttersenders A in FM aufmoduliert und als Rundfunksignal über die Sendeantenne 140 abgestrahlt wird. Infolge des im wesentlichen verzögerungsfreien Empfangs des RDS-Datenstroms mit dem Steuersignal für variable Dynamik läßt sich eine exakt zeitkorrelierte Einfügung des modulierten RDS-Datenstroms in das Multiplexsignal gewährleisten. Ein etwaiger Zeitversatz zwischen dem Nutzsignal- und dem Zusatzsignalkanal, wie er beispielsweise durch unterschiedlichen Schaltungsaufbau in den beiden Signalverarbeitungszweigen oder durch unterschiedliche Übertragungsstrecken - beispielsweise Nutzsignalkanal über Postkabelstrecke 1, Zusatzsignalkanal über Satellitenübertragungsstrecke - hervorgerufen sein kann, läßt sich durch geeignete Einrichtungen wie Laufzeitglieder, Verzögerungsleitungen o. dgl. korrigieren.

Auch im Falle einer ausschließlichen oder zusätzlichen Zuführung des Nutzsignals über Postkabelverbindung (hier PS1 und PS3) wird der RDS-Datenstrom über die Satellitenübertragungsstrecke zu den Muttersendern A, B übertragen. Die Stereomatrix 50 weist zusätzliche Eingänge für den Anschluß der Postkabelverbindungen auf. Die zusätzliche Postkabelzufuhr des Nutzsignals hat eine Reservefunktion für den Fall, daß die Satellitenübertragung des Nutzsignals gestört ist.

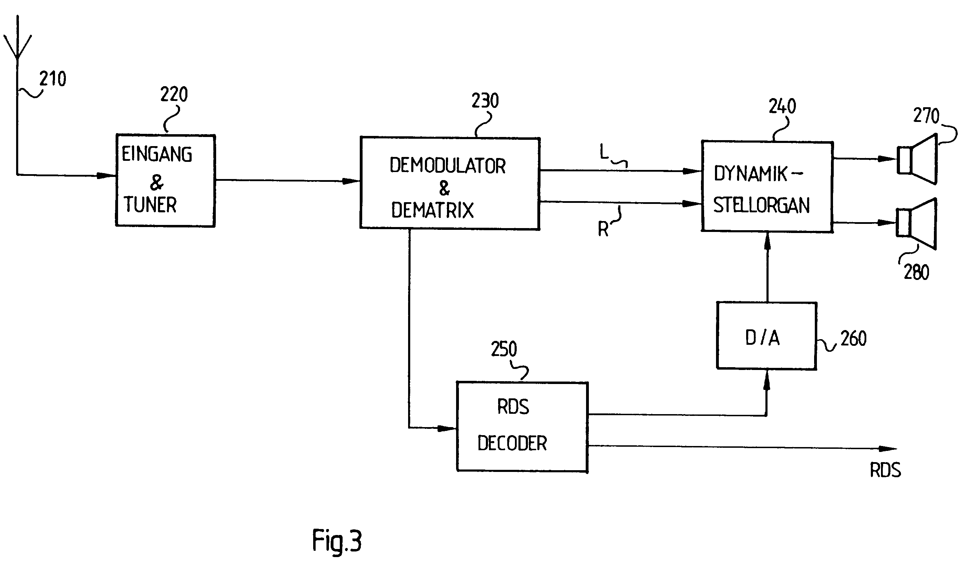

Ein in Fig. 3 dargestellter Hörfunkempfänger führt das an einer Empfangsantenne 210 anliegende Antennensignal einer Eingangs- und Tunerstufe 220 zu, wo das gewünschte Rundfunksignal aus dem Antennensignal gewonnen und einer Demodulator- und Dematrizierungsstufe 230 zugeführt wird. In der Stufe 230 wird durch FM-Demodulation des RF-Trägers das Multiplexsignal gewonnen, aus welchem das (L+R)-Signal und durch FM-Demodulation des unterdrückten 38 kHz-Trägers das (L-R)-Signal abgetrennt werden. Durch Dematrizierung der (L+R)- und (L-R)-Signale erhält man am Ausgang der Stufe 230 als NF-Signale die stereofonen Links(L)- und Rechts(R)-Signale, welche einem Dynamikstellorgan 240 zugeführt werden.

Aus dem Multiplexsignal wird in der Stufe 230 ferner der 57 kHz-Träger abgetrennt und demoduliert, wobei der daraus resultierende RDS-Datenstrom einem RDS-Decoder 250 zugeleitet wird. In dem RDS-Decoder 250 wird das darin eingefügte Steuersignal für die variable Dynamik anhand seiner erwähnten Kennung von den übrigen Teilen des RDS-Datenstroms abgetrennt, decodiert und einem Digital/Analog-Wandler 260 zugeführt, welcher aus dem digitalen Steuersignal ein analoges Steuersignal erzeugt. Dieses analoge Steuersignal steuert das Dynamikstellorgan 240 in der Weise, daß die originale Dynamik des stereofonen Hörfunkprogrammsignals ganz oder zumindest teilweise rekonstruiert wird. Das rekonstruierte stereofone Signal wird mittels Lautsprecher 270, 280 wiedergegeben. Die übrigen Teile des RDS-Datenstroms werden in dem RDS-Decoder 250 decodiert und als RDS-Informationen zur weiteren Verwendung in dem Empfänger zur Verfügung gestellt.

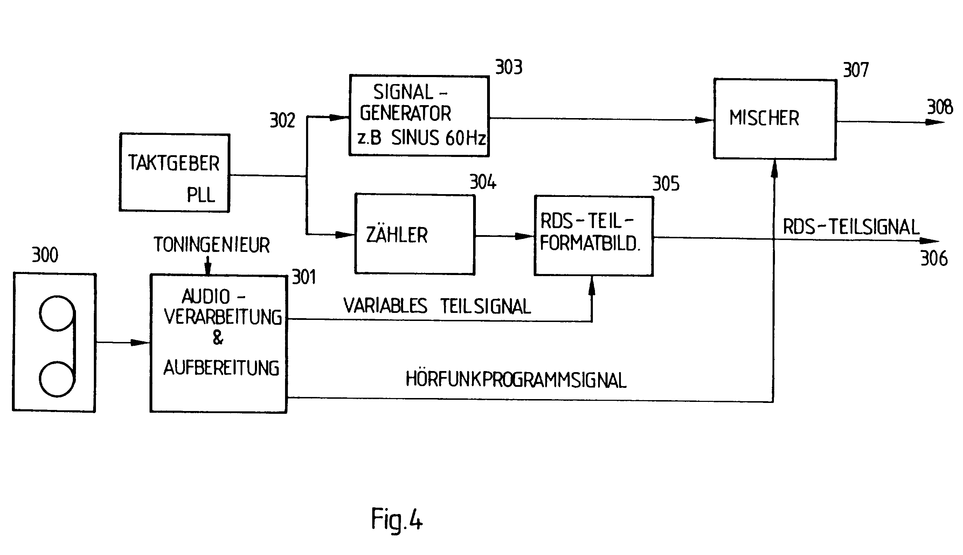

In Fig. 4 ist ein vereinfachtes Blockschaltbild eines Sendestudios aufgezeigt, um die Zeitkorrelation zwischen dem Hörfunkprogrammsignal und den variablen Steuer- bzw. Zusatzsignalen herzustellen. Die Audio-Daten gelangen von einer Tonquelle z.B. einem Magnetbandgerät 300 zur einer Audio-Verarbeitungs- und Aufbereitungsschaltung 301. Auf diese Schaltung hat ein Toningenieur Einfluß, indem er z.B. die Dynamik der Audiodaten variiert. Wie aus "Rundfunktechnische Mitteilungen", 1986, Heft 4, S. 158 bis 167 bekannt, kann die nachträgliche Gewinnung des optimalen Dynamik-Steuersignals auch durch einen Prozessor erfolgen.

Das entsprechende zu einem Hörfunkprogrammsignal gehörende variable Dynamikstell- bzw. Steuer- oder Zusatzsignal wird einem RDS-Teilformatbildner 305 zugeführt. Der RDS-Teilformatbildner 305 bildet aus dem variablen Zusatzsignal und einem Zählersignal, nachfolgend erstes Zeit-Referenzsignal genannt, eines Zählers 304 ein RDS-Teilsignal 306. Der Zähler 304 erhält von einem Taktgeber 302 einen Zähl- oder Taktimpuls. Bei jedem Taktimpuls zählt der Zähler um einen Zählschritt weiter, so daß sich das erste Zeit-Referenzsignal mit jedem Takt ändert. Der Taktgeber 302 kann z.B. als PLL (Phase Locked Loop) oder Taktgenerator ausgebildet sein und seinerseits von einer Uhr z.B. einer Funkuhr (Bundespostfrequenz 77,5 kHz) gesteuert werden. Gleichzeitig mit einem Zählimpuls wird ein Signalgenerator 303 mit dem gleichen Taktimpuls vom Taktgeber 302 angesteuert, wobei der Signalgenerator seinerseits ein fest definiertes Signal, im folgenden zweites Zeit-Referenzsignal genannt, mit einer verabredeten Frequenz erzeugt. Dies kann z.B. ein Sinus-Signal sein, dessen Frequenz eine Fuktion des Taktimpulses ist. Vereinbarungsgemäß erzeugt der Signalgenerator bei ein Taktsignal von 60 Taktimpulsen pro Sekunde (gleichverteilt) ein Sinus-Signal mit 60 Hz und der Zähler zählt währenddessen um 60 Zählerwerte weiter.

Von der Audio-Verarbeitung- und Aufbereitungsschaltung gelangen die eigentlichen Audio-Daten, die später als hörbare Hörfunkprogrammsignale über einen Sender abgesendet werden, zu einem Mischer 307. Der Mischer setzt aus dem Hörfunkprogrammsignal und dem zweiten Zeit-Referenzsignal des Signalgenerators ein resultierendes Signal 308 zusammen. Dabei ist das Zeit-Referenzsignal von Signalgenerator im unteren Frequenzbereich unhörbar dem Hörfunkprogrammsignal zugesetzt.

Das Hörfunkprogrammsignal 308 und das RDS-Teilsignal 306 gelangen auf getrennten Übertragungsstrecken oder über eine gemeinsamen Übertragungsstrecke zusammen zu einem Muttersender. Im folgenden sei angenommen, daß die beiden Signale 306 und 308 zum Muttersender auf getrennten Übertragungsstrecken gelangen.

Durch die Schaltungsanordnung im Sendestudio wird gewährleistet, das jedem variablen Zusatzsignal ein Zählersignal bzw. erstes Zeit-Referenzsignal zugeordnet wird, welches einem entsprechenden zweiten Zeit-Referenzsignal im Hörfunkprogrammsignal exakt zugeordnet werden kann, da der Zähler wie auch der Signalgenerator vom gleichen Taktgeber angesteuert werden.

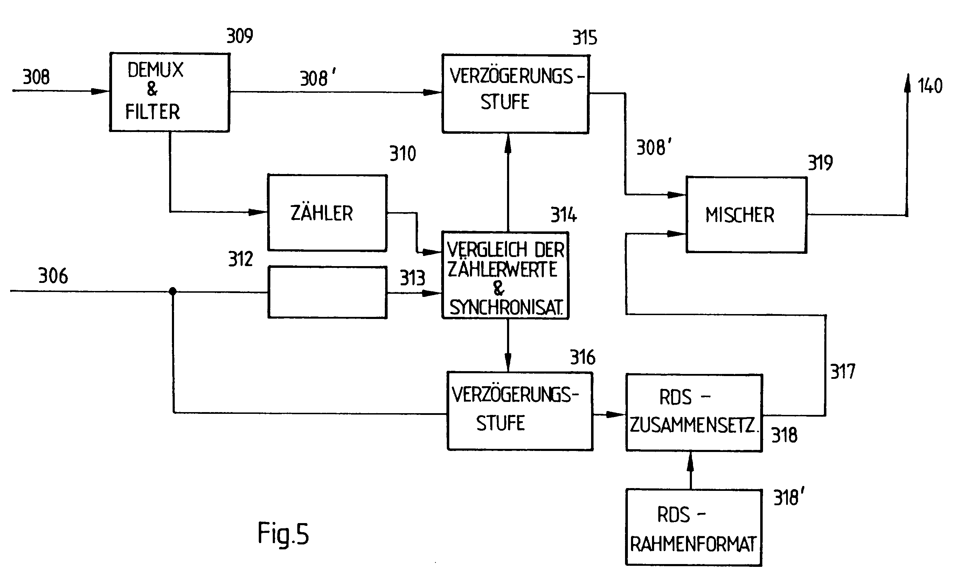

Fig. 5 zeigt ein vereinfachtes Blockschaltbild eines Muttersenders, wie alternativ bereits in Fig. 2 gezeigt. Das Hörfunkprogrammsignal wird zunächst einer Schaltungseinheit 309 zugeführt, die als Demultiplexer bzw. Decoder ausgebildet ist und die aus dem Hörfunkprogrammsignal das zweite Zeit-Referenzsignal des Signalgenerators 303 decodiert. Außerdem wird das zweite Zeit-Referenzsignal aus dem Hörfunkprogrammsignal herausgefiltert, so daß am Ausgang des Demultiplexers 309 nur noch das Hörfunkprogrammsignal 308' ohne das zweite Zeit-Referenzsignal zur Verfügung steht. Das zweite Zeit-Referenzsignal wird einem Zähler 310 zugeführt. Der Zähler wird durch das decodierte zweite Zeit-Referenzsignal zum Zählen veranlaßt, wobei der Zähler 310 auf den gleichen Takt wie der Zähler 304 im Sendestudio synchronisiert wird.

Das RDS-Teilsignal 306 wird einem Decoder 312 zugeführt, der aus dem RDS-Teilsignal 306 das erste Zeit-Referenzsignal des Zählers 304 decodiert. Das erste Zeit-Referenzsignal des Decoders 312 wie auch das zweite Zeit-Referenzsignal des Zählers 310 werden einer Schaltungeinheit 314, bestehend aus einem Vergleicher zum Vergleich der Zählerwerte und einer Synchronisationseinrichtung zugeführt. Aus dem Vergleich der Zählerwerte läßt sich eindeutig ableiten, welches der Zählersignale gegenüber dem anderen vor- oder nacheilt bzw. ob das RDS-Teilsignal vor dem ih zugeordneten Hörfunkprogrammsignal vor- oder nacheilt. In einfachster Weise ist der Vergleich der Zählerwerte auf einen Bitmustervergleich reduziert. Aus der Taktrate der Bitmuster und dem Vergleich läßt sich somit die Zeit als Stellgröße ableiten, mit der entweder das Hörfunkprogrammsignal oder das RDS-Teilsignal verzögert werden muß. Zur Verzögerung ist jeweils im Signalweg des Hörfunkprogrammsignals und des RDS-Signals eine variable Verzögerungsstufe 315 und 316 angeordnet. Die Verzögerungsstufen werden von der Synchronisationseinrichtung derart gesteuert, daß am Ausgang der Verzögerungsstufen jeweils einander zugeordnete Hörfunkprogrammsignale und RDS-Signale liegen, die auf eine gleichzeitige Zeitachse korreliert sind.

Im Signalweg des RDS-Signals liegt eine RDS-Zusammensetzschaltung 318, die aus dem RDS-Teilsignal 306 und dem RDS-Rahmenformat 318' das endgültige RDS-Signal 317 zusammensetzt. Der RDS-Zusammensetzer kann vor oder hinter der Verzögerungsstufe 316 angeordnet sein. Das RDS-Rahmenformat 318' besteht aus den unveränderlichen RDS-Signalen für eine Sendung bzw. einen Sender.

Das resultierende RDS-Signal 317 wie auch das Hörfunkprogrammsignal 307 werden einem Mischer 319 zugeführt und wie vorstehend beschrieben über die Senderantenne 140 abgestrahlt. Der Mischer weißt dabei die Funktionen des Addierers 120 und des Modulators 130, wie zu Fig. 2 beschrieben, auf.

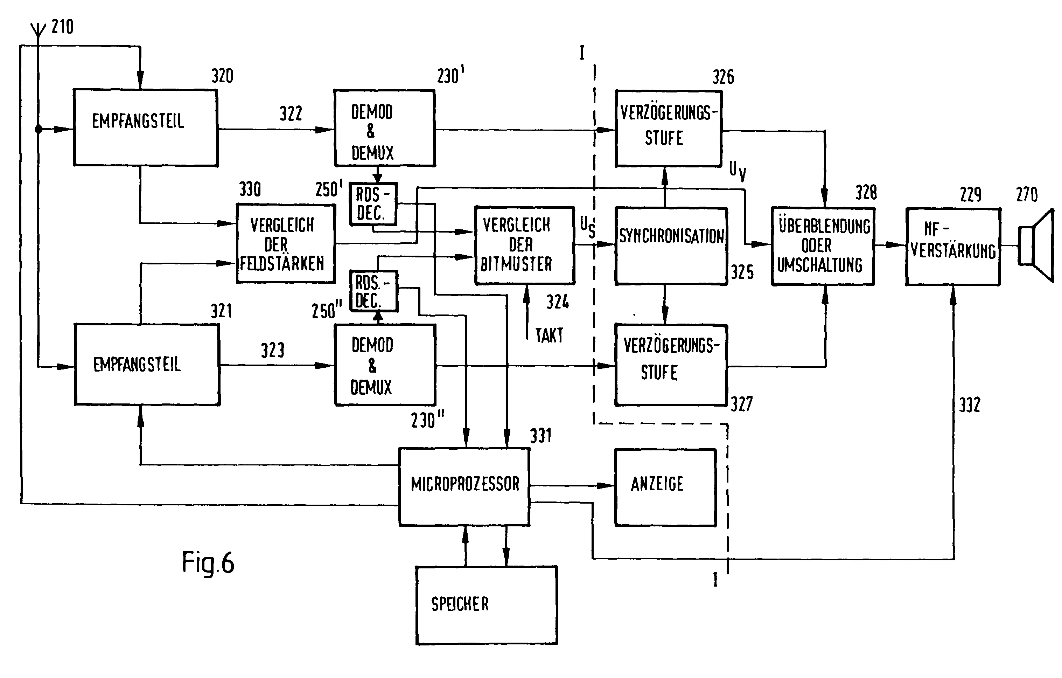

Fig. 6 zeigt ein alternatives Blockschaltbild zu Fig. 3, bei dem insbesondere ausgenutzt wird, daß im RDS-Signal ein veränderliches Zusatzsignal enthalten ist, das einem bestimmten Hörfunkprogrammsignal zugeordnet sind.

Der Rundfunkempfänger gemäß Fig. 6 weißt zwei Empfangsteile 320 und 321 auf, die mit der Empfangsantenne 210 verbunden sind. Somit weißt der Rundfunkempfänger zwei Empfängerzüge 322 und 323 auf. Vom Empfangsteil jedes Empfängerzuges, wo das gewünschte Rundfunksignal aus dem Antennensignal gewonnen wird, gelangen die Rundfunksignale zu einer Demodulatorund Dematrizierungsstufe 230' und 230". In der Stufe 230 wird durch FM-Demodulation des RF-Trägers das Multiplexsignal, wie zu Fig. 3 beschrieben, gewonnen. Ferner wird in den Stufen 230' und 230" aus dem Multiplexsignal der 57 kHz Träger abgetrennt und demoduliert, wobei der daraus resultierende RDS-Datenstrom jeweils einem RDS-Decoder 250' und 250" zugeleitet wird. In den RDS-Decodern 250' und 250" wird das darin eingefügte erste Zeit-Referenzsignal oder das variable Zusatzsignal anhand seiner Kennung von den übrigen Teilen des RDS-Datenstroms abgetrennt, decodiert und einer Vergleichsschaltung 324 zugeführt. Die Vergleichsschaltung ermittelt aus dem Vergleich übereinstimmender Bitmuster der ersten Zeit-Referenzsignale oder des Zusatzsignals eine Stellgröße Uₛ, die ein Maß dafür ist, um wieviel die Hörfunkprogrammsignale eines Empfängerzuges gegenüber dem anderen voreilen bzw. nacheilen. Die Stellgröße wird einer Synchronisationsschaltung 325 zugeführt, die im Signalweg der Empfängerzüge liegende Verzögerungsstufen 326 und 327 steuert. Die Synchronisationsschaltung sorgt dafür, daß am Ausgang der Verzögerungsstufen Hörfunkprogrammsignale gleichen Inhalts zeitlich exakt auf eine gleichzeitige Zeitachse synchronisiert sind. Die Verzögerungsstufen sind als variable Verzögerungsstufen ausgebildet, so daß die Hörfunkprogrammsignale der Empfängerzüge individuell verzögert werden können.

Die Hörfunkprogrammsignale am Ausgang der Verzögerungsstufen werden einer Überblendungs- oder Umschaltungseinrichtung zugeführt. Bei der Überblendung werden die beiden Hörfunkprogrammsignale in bekannter Weise addiert, wobei sich das Nutzsignal/Rausch - Verhältnis erheblich verbessert. Anschließend wird das resultierende Hörfunkprogrammsignal in bekannter Weise der NF-Verstärkungsstufe 329 zugeführt und an Wiedergabeeinrichtungen weitergegeben. Die NF-Verstärkung weist außerdem das in Fig. 3 gezeigte Dynamik-Stellorgan 240 auf. Aus Gründen der besseren Übersicht wird in Fig. 6 auf die Darstellung der Stereosignale L und R verzichtet.

Zusätzlich können Hörfunkprogrammsignale 322 und 323 der beiden Empfängerzüge außerdem einem Feldstärke-Vergleicher 330 zugeführt werden, der zum einen jeweils die Feldstärke der empfangenen Hörfunkprogrammsignale mißt und die gemessenen Feldstärken der Empfängerzüge miteinander vergleicht. Aus dem Ergebnis des Vergleichs wird eine Stellgröße Uᵥ abgeleitet, die der Überblendungs- oder Umschaltungseinrichtung 328 zugeführt wird. Überschreitet der Stellwert Uᵥ einen voreingestellten Schwellwert, so werden die Hörfunkprogrammsignale der Empfängerzüge nicht überblendet, sondern nur das stärkste an die NF-Verstärkungstufe 329 weitergegeben. Das schwächere Hörfunkprogrammsignal wird dann nicht mit dem stärkeren gemischt. Insbesondere wenn der Feldstärkeunterschied zwischen den beiden Hörfunkprogrammsignalen sehr groß ist und die Feldstärke des stärksten empfangenen Hörfunkprogrammsignals über einem gewünschten Schwellwert liegt, ist eine solche Umschaltung nützlich, da dann die Überblendung mit einem Hörfunkprogrammsignal schwacher Feldstärke kaum noch eine Verbesserung des resultierenden Hörfunkprogrammsignals bedeutet.

Der gesamte RDS-Datenstrom beider Empfängerzüge wird einem Mikroprozessor 331 zur Auswertung, wie zu Fig. 3 beschrieben, zugeführt. Aus der Tabelle der alternativen Frequenzen eines Hörfunkprogrammes wählt der Mikroprozessor (der auch einen D/A-Wandler enthält) mittels Steuerung der beiden Empfangsteile und unter Zuhilfenahme der Feldstärkemessung des Feldstärkevergleichers 330 jeweils die beiden stärksten empfangenen Hörfunkprogrammsignale eines Hörfunkprogrammes aus, wobei beide Hörfunkprogrammsignale von unterschiedlichen Sendern ausgesendet werden. Der Mikroprozessor ist mit dem in der NF-Verstärkung integrierten Dynamik-Stellorgan über eine Leitung 332 verbunden und steuert diesen in gewünschter Weise (Siehe Fig. 3)

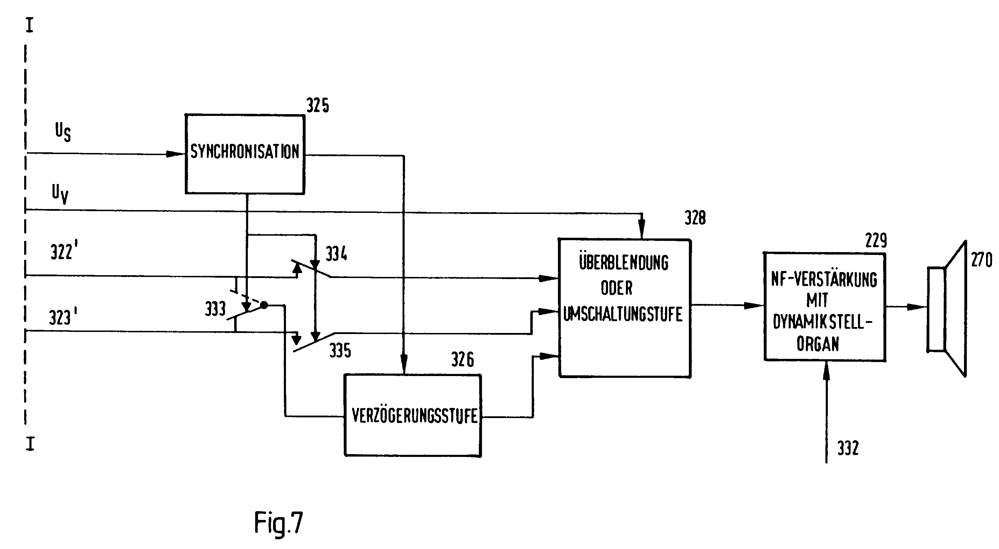

Wie in Fig. 7 gezeigt wird, muß im Signalweg eines jeden Empfängerzuges nicht unbedingt eine Verzögerungsstufe liegen. Die entsprechend erforderliche Verzögerung läßt sich auch mit nur einer Verzögerungsstufe bei zwei Empfängerzügen realisieren. Generell läßt sich zeigen, daß bei einem Rundfunkempfänger mit N Empfängerzügen nur N-1 Verzögerungsstufen notwendig sind, um die Hörfunkprogrammsignale eines Hörfunkprogramms von verschiedenen Sendern auf eine gleichzeitige Zeitachse zu synchronisieren. Durch eine von der Synchronisationseinrichtung gesteuerte Wechselschaltungseinrichtung, bestehend aus den Schaltern 333, 334 und 335, wird der Signalweg des zu verzögernden Empfangszuges über die variable Verzögerungsstufe umgeleitet und der Signalweg des anderen Empfangszuges direkt auf die Überbelndungs- oder Umschaltstufe geleitet.

## Patentansprüche

1. Verfahren zur Rundfunkübertragung eines zeitlich variierenden Steuersignals in exakter zeitkorrelierter Zuordnung zu einem stereofonen Hörfunkprogrammsignal, wobei das Steuersignal eine Information über die variierende Aussteuerung des ursprünglichen Hörfunkprogrammsignals enthält und empfangsseitig dazu verwendet wird, um bei der Wiedergabe des Hörfunkprogrammsignals die sendestudioseitige Aussteuerung zumindest teilweise im Sinne einer variablen Dynamik rückgängig zu machen, wobei das zeitlich variierende Steuersignal sendestudioseitig in den Datenstrom eines Radiodatensignals datenformatgerecht eingefügt wird, das auf diese Weise ergänzte Radiodatensignal vom Sendestudio zu terrestrischen Sendern übertragen wird, und das an den Sendern empfangene ergänzte Radiodatensignal jeweils einem Hilfsträger aufmoduliert, in das als Multiplexsignal zeitkorreliert vorliegende, ausgesteuerte Hörfunkprogrammignal eingefügt und zusammen mit dem Multiplexsignal terrestrisch abgestrahlt wird, **dadurch gekennzeichnet,** daß zur exakten zeitkorrelierten Zuordnung des zeitlich variierenden Steuersignals zum stereophonen Hörfunkprogrammsignal dem Hörfunkprogrammsignal und dem Datenstrom des Radiodatensignals jeweils ein Zeit-Referenzsignal zugesetzt wird, die sich zeitlich einander exakt zuordnen lassen.

2. Verfahren nach Anspruch 1, **dadurch gekennzeichnet,** daß zusätzlich zu dem Steuersignal sendestudioseitig in den Datenstrom des Radiodatensignals ein erstes Zeit-Referenzsignal eingefügt wird, welches mit einem entsprechenden zweiten Zeit-Referenzsignal zeitlich korreliert, wobei das zweite Zeit-Referenzsignal dem Hörfunkprogrammsignal zugesetzt wird.

3. Verfahren nach Anspruch 1 und/oder 2, **dadurch gekennzeichnet,** daß der terrestrische Sender eine Synchronisationseinrichtung (314) mit einer Vergleichsschaltung aufweist, daß der Synchronisationseinrichtung die beiden Zeit-Referenzsignale zugeführt werden, und daß die Synchronisationseinrichtung die exakte zeitkorrelierte Ausstrahlung des Hörfunkprogrammsignals mit dem Steuersignal steuert.

4. Verfahren nach einem der Ansprüche 1-3, **dadurch gekennzeichnet,** daß das erste Zeit-Referenzsignal ein sich zeitlich variierender Zahlenwert ist und/oder das zweite Zeit-Referenzsignal ein definiertes Signal, z.B. ein Sinussignal, ist, welches dem Hörfunkprogrammsignal sendestudioseitig im unteren Frequenzbereich unhörbar, z.B. unterhalb 100 Hz, zugesetzt wird.

5. Verfahren nach einem den Ansprüche 1-4, **dadurch gekennzeichnet,** daß sendestudioseitig eine Synchronisationseinrichtung vorgesehen ist, die aus einem Taktgeber (302), einem Zähler (304) und einem Signalgenerator (305) besteht, daß der Taktgeber dem Signalgenerator ein Takt-Signal zuführt, daß der Zähler vom Signalgenerator und/oder Taktgeber gesteuert wird, und daß zeitkorreliert mit dem Einfügen des Zählerwertes in den RDS-Datenstrom ein definiertes Signal vom Signalgenerator, z.B. ein Rechteckimpuls, Rechtecksignal oder Sinussignal, dem Hörfunkprogrammsignal zugesetzt wird.

6. Verfahren nach einem der vorhergehenden Ansprüche, **dadurch gekennzeichnet,** daß die beiden Zeit-Referenzsignale in ganz bestimmten Zeitabständen zum Sender gesendet werden.

7. Verfahren nach einem der Ansprüche 1 - 4, **dadurch gekennzeichnet,** daß ein erstes und/oder zweites Zeit-Referenzsignal ausgesendet wird, wenn sich das Steuersignal ändert.

8. Verfahren nach einem der vorhergehenden Ansprüche, **dadurch gekennzeichnet,** daß das zweite Zeit-Referenzsignal am Sender aus dem Hörfunkprogrammsignal herausgefiltert wird und/oder das erste Zeit-Referenzsignal vom Sender mit dem RDS-Datenstrom ausgestrahlt wird.

9. Verfahren nach einem der vorhergehenden Ansprüche, **dadurch gekennzeichnet,** daß das erste Zeit-Referenzsignal in einem Empfänger als Steuersignal zur Steuerung verschiedener Einrichtungen im Empfänger verwendet wird.

10. Verfahren nach einem der vorhergehenden Ansprüche, **dadurch gekennzeichnet,** daß die Einfügung des Steuersignals mit einer variierenden oder festen Voreilung gegenüber dem betreffenden Programmsignalabschnitt des Hörfunkprogrammsignals erfolgt.

11. Rundfunkempfänger mit mehreren Empfängerzügen, welche in der Lage sind, das gleiche Hörfunkprogramm auf verschiedenen Frequenzen zu empfangen, wobei das Hörfunkprogrammsignal ein ihm zugeordnetes zeitlich variierendes Steuersignal zur exakten Zeitzuordnung zum Hörfunkprogrammsignal enthält, wobei das Steuersignal eine Information über die variierende Aussteuerung des ursprünglichen Hörfunkprogrammsignals enthält und empfangsseitig dazu verwendet wird, um bei der Wiedergabe des Hörfunkprogrammsignals diese sendestudioseitige Aussteuerung zumindest teilweise im Sinne einer variablen Dynamik rückgängig zu machen, **dadurch gekennzeichnet,** daß jedem Empfängerzug (322, 323) ein Decoder (250', 250") zur Dekodierung des im Hörfunkprogrammsignal enthaltenden Steuersignals zugeordnet ist, daß eine Vergleichseinrichtung (324) vorgesehen ist, welche die mit verschieden Empfängerzügen empfangenen Steuersignale miteinander vergleicht und aus dem Vergleich eine Stellgröße (Uₛ) ermittelt, welche ein Maß für die zeitliche Verzögerung eines Hörfunkprogrammsignals gegenüber dem anderen darstellt.

12. Rundfunkempfänger nach Anspruch 11, **dadurch gekennzeichnet,** daß im Signalweg jedes Empfängerzuges eine variable Verzögerungsstufe (326, 327) liegt, daß die Verzögerungsstufe von einer Synchronisationseinrichtung (325) gesteuert wird, der die Stellgröße (Uₛ) zugeführt wird, und daß die Synchronisationseinrichtung mittels Steuerung einer Verzögerungsstufe gleiche Hörfunkprogrammsignale verschiedener Sender auf eine einheitliche und/oder gleichzeitige Zeitachse synchronisiert.

13. Rundfunkempfänger nach Anspruch 11 und/oder 12, **dadurch gekennzeichnet,** daß die Hörfunkprogrammsignale von mehreren Empfängerzügen nach der Synchronisation überlagert oder überblendet werden, wobei ein resultierendes Hörfunkprogrammsignal entsteht.

14. Rundfunkempfänger nach Anspruch 13, **dadurch gekennzeichnet,** daß das resultierende Hörfunkprogrammsignal an eine Wiedergabeeinrichtung, z.B. an einen Lautsprecher (270), abgegeben wird.

15. Rundfunkempfänger nach einem der Ansprüche 11 - 14, **dadurch gekennzeichnet,** daß der Decoder (250', 250") ein RDS-Decoder ist, daß die Vergleichseinrichtung (324) einen Bitmustervergleich von sendestudioseitig in den Datenstrom eines Radiodatensignals eingefügten RDS-Daten durchführt und daraus den Laufzeitunterschied identischer, einander zugeordneter Bitmuster ermittelt.

16. Rundfunkempfänger nach einem der Ansprüche 11, 13-15, **dadurch gekennzeichnet,** daß in einem Empfänger mit n Empfängerzügen n-1 Verzögerungsstufen vorgesehen sind (siehe Fig. 7), die von der Synchronisationseinrichtung (325) derart gesteuert werden, daß nur voreilende Hörfunkprogrammsignale verzögert werden.

17. Rundfunkempfänger nach einem der Ansprüche 11 - 16, **dadurch gekennzeichnet,** daß eine Anzeigeeinrichtung im Rundfunkempfänger die von der Vergleichseinrichtung ermittelte Stellgröße U_{S} angezeigt .

## Claims

1. Method of transmitting by radio a time varying control signal in exact time correlated relationship with a stereophonic sound radio program signal, wherein the control signal includes an item of information regarding the varying recording level of the original radio program signal and said control signal is used at the receiving end during the reproduction of the radio program signal for at least partially reversing, in the sense of a variable dynamic range, the recording level regulating process that was effected at the transmitting studio end, wherein the time varying control signal is inserted in a suitable data format into the data stream of a radio data signal at the transmitting studio end, the radio data signal expanded in this manner is transmitted from the transmitting studio to terrestrial transmitters and the expanded radio data signal received at the transmitters is modulated onto a respective auxiliary carrier, inserted into the radio program signal, whose recording level has been regulated and which is in the form of a time correlated multiplex signal, and is then radiated terrestrially together with the multiplex signal, characterised in that, a respective time reference signal is mixed with the radio program signal and the data stream of the radio data signal so as to permit them to be exactly associated in time with one another for the purposes of obtaining an exact time correlated relationship between the time varying control signal and the stereophonic sound radio program signal.

2. Method in accordance with Claim 1, characterised in that, in addition to the control signal, a first time reference signal is inserted into the data stream of the radio data signal at the transmitting studio end, the first time reference signal being correlated in time with a corresponding second time reference signal and wherein the second time reference signal is mixed with the radio program signal.

3. Method in accordance with Claim 1 and/or 2, characterised in that, the terrestrial transmitter comprises a synchronising device (314) including a comparator circuit, that the two time reference signals are supplied to the synchronising device and that the synchronising device controls the exact time correlated radiation of the radio program signal by means of the control signal.

4. Method in accordance with any of the Claims 1 - 3, characterised in that, the first time reference signal is a time varying numerical value and/or the second time reference signal is a defined signal e.g. a sinusoidal signal which is mixed with the sound radio program signal at the transmitting studio end in an inaudible manner in the lower frequency range e.g. below 100 Hz.

5. Method in accordance with any of the Claims 1 - 4, characterised in that, a synchronising device is provided at the transmitting studio end which consists of a clock pulse generator (302), a counter (304) and a signal generator (305), that the clock pulse generator supplies a clock signal to the signal generator, that the counter is controlled by the signal generator and/or the clock pulse generator and that a defined signal from the signal generator e.g. a rectangular pulse, a rectangular signal or a sinusoidal signal is mixed with the radio program signal in time correlated manner with the insertion of the numerical value into the RDS data stream.

6. Method in accordance with any of the preceding Claims, characterised in that, the two time reference signals are transmitted to the transmitter at quite specific time intervals.

7. Method in accordance with any of the Claims 1 - 4, characterised in that, a first and/or second time reference signal is transmitted when the control signal changes.

8. Method in accordance with any of the preceding Claims, characterised in that, the second time reference signal is filtered out from the radio program signal at the transmitter and/or the first time reference signal is radiated with the RDS data stream by the transmitter.

9. Method in accordance with any of the preceding Claims, characterised in that, the first time reference signal is used in a receiver as a control signal for controlling various devices in the receiver.

10. Method in accordance with any of the preceding Claims, characterised in that, the insertion of the control signal is done in advance, by a variable or fixed amount of time, vis a vis the relevant program signal portion of the radio program signal.

11. Radio receiver including a plurality of receiving chains which are capable of receiving the same radio program at different frequencies, wherein the radio program signal contains a time varying control signal that is associated therewith for the purposes of providing an exact time relationship with respect to the radio program signal, wherein the control signal includes an item of information regarding the varying recording level of the original radio program signal and said control signal is used at the receiving end during the reproduction of the radio program signal for at least partially reversing, in the sense of a variable dynamic range, this variation in the recording level that was produced at the transmitting studio end, characterised in that, a decoder (250', 250") for decoding the control signal contained in the radio program signal is associated with each receiving chain (322, 323), that there is provided a comparator device (324) which compares the control signals received by the various receiving chains with one another and derives from the comparison a control variable (Us) which represents a measure for the time delay of one radio program signal relative to the other.

12. Radio receiver in accordance with Claim 11, characterised in that, there is a variable delay stage (326, 327) in the signal path of each receiving chain, that the delay stage is controlled by a synchronising device (325) to which the control variable (Us) is supplied and that the synchronising device synchronises the same radio program signals from different transmitters on a common and/or simultaneous time axis by controlling one of the delay stages.

13. Radio receiver in accordance with Claim 11 and/or 12, characterised in that, following the synchronisation process, the radio program signals from a plurality of receiving chains are superimposed or mixed whereby one resulting radio program signal occurs.

14. Radio receiver in accordance with Claim 13, characterised in that, the resulting radio program signal is passed on to a reproduction device e.g. to a loudspeaker (270).

15. Radio receiver in accordance with any of the Claims 11 - 14, characterised in that, the decoder (250', 250") is an RDS decoder, that the comparator device (324) effects a bit pattern comparison of the RDS data inserted at the transmitting studio end into the data stream of a radio data signal and determines therefrom the difference in transit times of identical, mutually associated bit patterns.

16. Radio receiver in accordance with any of the Claims 11, 13 - 15, characterised in that, in a receiver including n receiving chains, there are provided n-1 delay stages (see Fig. 7) which are controlled by the synchronising device (325) in such a way that only the time-leading radio program signals are delayed.

17. Radio receiver in accordance with any of the Claims 11 - 16, characterised in that, a display device in the radio receiver displays the control variable (Us) determined by the comparator device.

## Revendications

1. Procédé de transmission radiophonique d'un signal de commande variable dans le temps en coordination de corrélation temporelle exacte avec un signal de programme de radiodiffusion sonore stéréophonique - où ce signal de commande contient une information sur l'excitation variable du signal de programme de radiodiffusion sonore d'origine et est utilisé côté réception pour annuler au moins en partie au sens d'une dynamique variable l'excitation côté studio d'émission lors de la reproduction du signal de programme de radiodiffusion, où le signal de commande variable dans le temps est introduit côté studio d'émission dans le flux de données d'un signal de données radio conformément à la structure de données, le signal de données radio complété de cette manière est transmis du studio d'émission à des émetteurs terrestres, et chaque signal de données radio reçu aux émetteurs complété est modulé respectivement sur une sous-porteuse, est introduit dans le signal de programme de radiodiffusion sonore excité présent sous la forme d'un signal multiplex en corrélation temporelle et est soumis à un rayonnement terrestre avec le signal multiplex - **caractérisé en ce que** pour la coordination de corrélation temporelle exacte du signal de commande variable dans le temps avec le signal de programme de radiodiffusion sonore stéréophonique, des signaux de référence de temps sont ajoutés respectivement au signal de programme de radiodiffusion sonore et au flux de données du signal de données radio qui peuvent être exactement coordonnés temporellement l'un par rapport à l'autre.

2. Procédé d'après la revendication 1, **caractérisé en ce que** en plus du signal de commande côté studio d'émission un premier signal de référence de temps est introduit dans le flux de données du signal de données radio et est corrélé temporellement avec un deuxième signal de référence de temps, le deuxième signal de référence de temps étant ajouté au signal de programme de radiodiffusion sonore.

3. Procédé d'après la revendication 1 et/ou 2 **caractérisé en ce que**
- l'émetteur terrestre présente un dispositif de synchronisation (314) avec un circuit comparateur
- les deux signaux de référence de temps sont transmis au dispositif de synchronisation
- le dispositif de synchronisation commande la corrélation temporelle exacte du rayonnement du signal de programme de radiodiffusion sonore avec le signal de commande.

4. Procédé d'après une des revendications 1 à 3 **caractérisé en ce que** le premier signal de référence de temps est une valeur numérique se modifiant dans le temps et/ou le deuxième signal de référence de temps est un signal défini, par exemple un signal sinusoïdal, qui est ajouté inaudiblement au signal de programme de radiodiffusion sonore côté studio d'émission dans le domaine fréquentiel bas, par exemple en dessous de 100 Hz.

5. Procédé d'après une des revendications 1 à 4, **caractérisé en ce que**
- côté studio d'émission un dispositif de synchronisation est prévu, composé d'un rythmeur (302), d'un compteur (304), et d'un générateur de signaux (305)
- le rythmeur transmet un signal de rythme au générateur de signaux
- le compteur est commandé par le générateur de signaux et/ou le rythmeur
- en corrélation temporelle avec l'introduction de la valeur du compteur dans le flux de données du signal de données radio (RDS), un signal défini, par exemple une impulsion rectangulaire, un signal rectangulaire ou un signal sinusoïdal est ajouté par le générateur de signaux au signal de programme de radiodiffusion sonore.

6. Procédé d'après une des revendications précédentes **caractérisé en ce que** les deux signaux de référence de temps sont envoyés à l'émetteur à des intervalles de temps déterminés précisément.

7. Procédé d'après une des revendications 1 à 4 **caractérisé en ce que**, un premier et/ou second signal de référence de temps est envoyé lorsque le signal de commande change.

8. Procédé d'après une des revendications précédentes **caractérisé en ce que** le second signal de référence de temps est sorti par filtrage du signal de programme de radiodiffusion au niveau de l'émetteur et/ou le premier signal de référence de temps est rayonné à partir de l'émetteur avec le flux de données du signal de données radio.

9. Procédé d'après une des revendications précédentes **caractérisé en ce que** le premier signal de référence de temps est utilisé dans un récepteur comme signal de commande pour la commande de différents dispositifs dans le récepteur.

10. Procédé d'après une des revendications précédentes **caractérisé en ce que** l'introduction du signal de commande a lieu avec une avance variable ou fixe par rapport au segment de signal de programme concemé du signal de programme de radiodiffusion sonore.

11. Récepteur radiophonique avec plusieurs lignes réceptrices qui sont en mesure de recevoir le même programme de radiodiffusion sonore sur différentes fréquences, où le signal de programme de radiodiffusion sonore comprend un signal de commande dédié variant dans le temps pour la coordination temporelle exacte avec le signal de programme de radiodiffusion, où le signal de commande comprend une information sur l'excitation variable du signal de programme de radiodiffusion sonore d'origine et est utilisé côté réception pour annuler au moins en partie au sens d'une dynamique variable l'excitation côté studio d'émission lors de la reproduction du signal de programme de radiodiffusion sonore, **caractérisé en ce que**
- à chaque ligne du récepteur (322, 323) est affecté un décodeur (250', 250") pour le décodage du signal de commande contenu dans le signal de programme de radiodiffusion sonore,
- un dispositif comparateur (324) est prévu pour comparer entre eux les signaux de commande reçus par les différentes lignes réceptrices et détecter à partir de la comparaison une variable réglante (Uₛ) qui représente une grandeur pour le retard temporel d'un signal de programme de radiodiffusion sonore par rapport à l'autre.

12. Récepteur radiophonique d'après la revendication 11 **caractérisé en ce que**
- un étage retardateur variable (326, 327) se trouve sur le trajet du signal de chaque ligne réceptrice
- l'étage retardateur est commandé par un dispositif de synchronisation (325) auquel est transmis la variable réglante (Uₛ)
- le dispositif de synchronisation synchronise au moyen de la commande d'un étage retardateur les signaux de programme de radiodiffusion sonore identiques de différents émetteurs sur une base de temps homogène et/ou simultanée.

13. Récepteur radiophonique d'après la revendication 11 et / ou 12 **caractérisé en ce que** les signaux de programme de radiodiffusion sonore de plusieurs lignes réceptrices sont superposés ou fondus après la synchronisation, il en résulte alors l'apparition d'un signal de programme de radiodiffusion sonore.

14. Récepteur radiophonique d'après la revendication 13 **caractérisé en ce que** le signal de programme de radiodiffusion sonore résultant est délivré à un dispositif de reproduction, par exemple à un haut-parleur (270).

15. Récepteur radiophonique d'après les revendications 11 à 14 **caractérisé en ce que**
- le décodeur (250', 250") est un décodeur de signaux de données radio (RDS)
- le dispositif comparateur (324) exécute une comparaison de configuration binaire de données de signaux de données radio introduites dans le flux de données d'un signal de données radio côté studio d'émission et détecte l'écart de temps de propagation de configurations binaires identiques coordonnées les unes par rapport aux autres.

16. Récepteur radiophonique d'après une des revendications 11, 13 à 15, **caractérisé en ce que** dans un récepteur à n lignes réceptrices, n-1 étages retardateurs sont prévus (voir figure 7), qui sont commandés par le dispositif de synchronisation (325) de sorte que seuls les signaux de programme de radiodiffusion sonore en avance sont retardés.

17. Récepteur radiophonique d'après une des revendications 11 à 16 **caractérisé en ce que** un dispositif d'affichage dans le récepteur radiophonique affiche la variable réglante Uₛ détectée par le dispositif comparateur.
